# EUROPEAN PATENT SPECIFICATION

(11) **EP 1 462 477 B1**
(45) Date of publication and mention of the grant of the patent: **18.03.2009**
(21) Application number: 04007105.2
(22) Date of filing: 24.03.2004
(51) Int. Cl.: C08K 3/36, C08K 9/04

(54) **Fluororubber molded article and method for producing the same**
Fluorkautschuk-Formteil und Verfahren zur Herstellung davon
Article moulé en caoutchouc fluoré et son procédé de fabrication

(30) Priority: 25.03.2003 JP 2003082972
(43) Date of publication of application: 29.09.2004
(73) Proprietor: NICHIAS CORPORATION, Tokyo (JP)
(72) Inventor: Kuzawa, Naoya Nichias Corporation, Hamamatsu-shi Shizuoka (JP); Watanabe, Katsumi Nichias Corporation, Hamamatsu-shi Shizuoka (JP); Nakano, Mitsuyuki, Minato-ku Tokyo (JP)
(74) Representative: Grünecker, Kinkeldey, Stockmair & Schwanhäusser Anwaltssozietät

(56) References cited:
- EP-A- 0 656 391
- WO-A-01/52618
- WO-A-97/19983
- DE-A- 3 728 774
- GB-A- 849 042
- US-A1- 2003 050 358
- DATABASE WPI Section Ch, Week 198607 Derwent Publications Ltd., London, GB; Class A14, AN 1986-045035 XP002287043 & JP 60 262845 A (HITACHI CABLE LTD) 26 December 1985 (1985-12-26)
- DATABASE WPI Section Ch, Week 199025 Derwent Publications Ltd., London, GB; Class A85, AN 1990-187904 XP002287044 & JP 02 121206 A (HITACHI CABLE LTD) 9 May 1990 (1990-05-09)
- DATABASE WPI Section Ch, Week 199440 Derwent Publications Ltd., London, GB; Class A14, AN 1994-322316 XP002287045 & JP 06 248144 A (UCHIYAMA KOGYO KK) 6 September 1994 (1994-09-06)

## Description

The present invention relates to a molded article comprising a fluororubber, and more particularly to a fluororubber molded article used in a site requiring purity, low metal elution, low gas release, plasma resistance, ozone resistance, chemical resistance, heat resistance, etc., particularly used in semiconductor production equipment or semiconductor conveyance equipment. The invention equally relates to a method for producing the fluororubber molded article.

In production processes such as semiconductor production and liquid crystal production, various circumstances such as a plasma atmosphere, a chemical atmosphere and an ozone atmosphere are used, and exposure to high temperatures is experienced in some cases. Accordingly, as rubbers used for such applications, there has frequently been used fluororubber compositions (for example, see JP-A-2000-119468).

Further, in the semiconductor production and the liquid crystal production, the control of impurities in the production processes is very important for improvement in yields and rubber materials used in production equipment require purity such as low gas release and low elution from the materials and few particles. To cope with such requirements, JP-A-2003-096220 proposes a fluororubber molded article obtained by decreasing the metal content in a fluororubber comprising a tetrafluoroethylene-propylene copolymer to 1.5% by weight or less, preparing a preformed product without using crosslinking chemicals such as a crosslinking agent and a crosslinking assistant, and without using other compounding materials at all or with the use of bare minimum thereof if used, and irradiating the preformed product with ionizing radiation.

However, this fluororubber molded article is not fully satisfactory in mechanical characteristics of rubber such as tensile strength and hardness. In particular, when this is used for moving-part applications, it has been revealed that the problems of torsion and breakage may be encountered.

JP-A-60-262845 discloses a fluororubber molded article obtained by a process comprising subjecting a fluororubber composition to crosslinking by irradiation of ionizing radiation, wherein said fluororubber composition comprises a tetrafluoroethylene-propylene copolymer and silica.

WO 97/19983 discloses a composition used for the preparation of electronic components such as semiconductor devices, said composition comprising a curable elastomeric perfluoropolymer and a reinforcing filler which may be silica.

WO 01/52618 discloses a process for the preparation of a surface-stabilized silica having a hydrophobic surface, said silica having a particle size ranging from 1 nm to 1000 nm and preferably from 2 nm to 100 nm.

Accordingly, an object of the present invention is to provide a fluororubber molded article excellent in purity with respect to gas release and elution from a rubber material and particles, excellent in heat resistance, and also excellent in mechanical characteristics, and to provide a method for producing the fluororubber molded article.

Said object is achieved by a fluororubber molded article obtainable by a process comprising subjecting a fluororubber composition to crosslinking by irradiation of ionizing radiation, wherein said fluororubber composition comprises:
(i) a raw rubber which comprises a tetrafluoroethylene-propylene copolymer and which has a metal element content of 1.5% by weight or less; and
(ii) silica which has a primary particle size of 0.5 µm or less and which has been treated to have a hydrophobic surface, in an amount of from 1 to 30 parts by weight per 100 parts by weight of said raw rubber (i); and
(iii) triallyl isocyanurate in an amount of 0.1 to 20 parts by weight per 100 parts by weight of said raw rubber (i),
said process further comprising subjecting the molded article to heat treatment at a temperature of 50 to 300 °C for 0.1 to 10 hours.

The product is excellent in purity with respect to gas release and elution from a rubber material and particles, and also excellent in heat resistance and mechanical characteristics.

The present invention also relates to a method for producing a fluororubber molded article, which comprises the steps of:
(A) providing a fluororubber composition comprising:
   (i) a raw rubber which comprises a tetrafluoroethylene-propylene copolymer and which has a metal element content of 1.5% by weight or less; and
   (ii) silica which has a primary particle size of 0.5 µm or less and which has been treated to have a hydrophobic surface;
(B) preforming said fluororubber composition into a predetermined form in a heated atmosphere to obtain a preformed product;
(C) subjecting said preformed product to crosslinking by irradiation of ionizing radiation to obtain a crosslinked product; and
(D) heat treating said crosslinked product at a temperature of 50 to 300°C for 0.1 to 10 hours.

The invention will be described in detail below. The raw rubber used in the invention is a rubber comprising a tetrafluoroethylene-propylene copolymer and having a metal content of 1.5% by weight or less. As a method for reducing the metal element content in the tetrafluoroethylene-propylene copolymer, reference can be made to JP-A-2003-096220. Although the composition of this tetrafluoroethylene-propylene copolymer is not limited, the molar ratio of tetrafluoroethylene to propylene is preferably from 40:60 to 60:40, and more preferably from 50:50 to 60:40.

The silica used has a primary particle size of 0.5 µm or less and has been treated to have a hydrophobic surface. Such silica is available from the market as, for example, R202, R805, R812 and R812S manufactured by Nippon Aerosil Co., Ltd. Further, the content of the silica is from 1 to 30 parts by weight per 100 parts by weight of the raw rubber. When the content is less than 1 part by weight, no enhancing effect of mechanical strength may be obtained. On the other hand, when it exceeds 30 parts by weight, rubber elasticity may be deteriorated, and there is a possibility that particles are developed to contaminate the outside.

Further, triallyl isocyanurate is added to the composition as a co-crosslinking agent. The triallyl isocyanurate for use herein may be a triallyl isocyanurate prepolymer. As the triallyl isocyanurate, there can be used one well known in the art, and it is also available as, for example, TAIC and TAIC Prepolymer manufactured by Nippon Kasei Chemical Co., ltd. The amount of this triallyl isocyanurate added is from 0.1 to 20 parts by weight per 100 parts by weight of the raw rubber, and a molded article sufficiently crosslinked is obtained by adjusting the amount of the triallyl isocyanurate added within this range.

The above-mentioned rubber composition is formed in a predetermined form (generally under a pressure of 20 to 70 MPa per unit area of the product for a retention time of 5 to 20 min.), and the resulting preformed product is irradiated with ionizing radiation to perform crosslinking, thereby obtaining the fluororubber molded article of the invention. As the ionizing radiation, there can be used, for example, a γ-ray, an electron beam, an X-ray, a proton beam, a deuteron beam, an α-ray, or a β-ray. They can be used either alone or in combination. In particular, the γ-ray and the electron beam are preferred because of their easy use. The use of the γ-ray makes it possible to conduct sterilization treatment, as well as crosslinking, and is suitable particularly in the food field.

As for the dose of ionizing radiation, the amount of energy sufficient to permeate throughout the preformed product in the thickness direction thereof is necessary. Lack of the dose results in insufficient crosslinking to fail to impart sufficient physical properties such as mechanical strength and compression set to the preformed product. On the other hand, when the dose becomes too much, the disintegration reaction of fluororubber molecules proceeds to lower the molecular weighty thereby deteriorating physical properties such as mechanical strength. In the invention, when the total dose of ionizing radiation is from 10 to 500 kGy, almost sufficient crosslinking can be performed.

As for the irradiation atmosphere of ionizing radiation, the preformed product can be irradiated in any atmosphere such as a vacuum atmosphere, an atmospheric atmosphere or an inert gas atmosphere. In the case of the γ-ray, the preformed product is irradiated therewith particularly preferably in an atmosphere in which oxygen is removed as much as possible, such as in the vacuum or in an inert gas. The presence of oxygen in the irradiation atmosphere inhibits the crosslinking reaction. As a result, there is a fear that the mechanical strength of the molded article becomes insufficient, or that the surface of the molded article is sticky. In the case of the electron beam, there is no problem even when the preformed product is irradiated therewith in the air.

Further, the fluororubber molded article obtained as described above is heated, thereby improving the stability of the molded article and removing volatile components to further improve purity. The heat treatment is conducted at a temperature of 50°C to 300,0 for 0.1 to 10 hours, preferably at a temperature of 150°C to 250°C for 1 to 2 hours. There is no particular limitation on the heating method, and the molded article can be treated in any medium of hot water, steam and oil, as well as in an electric furnace of an oxygen atmosphere, a reduced-pressure atmosphere or a reduction atmosphere.

The fluororubber molded article of the invention is excellent in mechanical characteristics such as heat resistance, mechanical strength and compression set, so that it is suitably used in rubber materials employed in fields requiring purity, such as the field of semiconductor production, the medical field and the food field. For example, in the field of semiconductor production, it can be used in semiconductor production equipment such as wet washing equipment, plasma etching equipment, plasma ashing equipment, plasma CVD equipment, ion implantation equipment or sputtering equipment, and in auxiliary equipment thereof such as wafer conveyance equipment.

However, when mechanical characteristics are put above purity in the above-mentioned uses, it is also possible to use other co-crosslinking agents and fillers. In that case, it is preferred that the amount thereof used is limited to the minimum. Further, in the fluororubber molded article of the invention, the tetrafluoroethylene-propylene copolymer alone is used as the raw rubber. However, another fluororubber may also be incorporated within such a range that the total metal content of the raw rubber does not exceed 1.5% by weight and the effect of the invention is not impaired. Examples thereof include a vinylidene fluoride-hexafluoropropylene copolymer, a vinylidene fluoride-hexafluoropropylene-tetrafluoroethylene copolymer, a vinylidene fluoride-hexafluoropropylene-perfluoromethyl vinyl ether copolymer and an ethylene-tetrafluoroethylene-perfluoromethyl vinyl ether copolymer.

### EXAMPLES

The present invention will be illustrated in greater detail with reference to the following Examples and

### Comparative Examples.

### EXAMPLE 1 AND COMPARATIVE EXAMPLES 1 TO 4

The molding method and evaluation methods of test pieces used in the Example and Comparative Examples are as follows:

### Molding Method

Components having a formulation shown in Table 1 were kneaded by an open roll at 20 to 50°C for 10 minutes. The resulting fluororubber composition was set in a mold, which was preheated with a hot press until the mold
temperature reached 170°C, followed by maintaining it for about 1 minute under pressure. Then, the mold was taken out of the hot press, and cooled until the mold
temperature was lowered to 50°C or less, followed by mold release to obtain a preformed product. Then, the
preformed product was irradiated with a γ-ray of 120 kGy in a nitrogen atmosphere to obtain a test piece. Further, in Example 1, the resulting test piece was further heat treated with an electric furnace in an atmosphere of oxygen at 200°C for 2 hours.

Details of the fluororubber, the co-crosslinking agent and the fillers used in the Example and Comparative Examples are as follows:

### Fluororubber:

A fluororubber obtained by purifying a tetrafluoro-ethylenepropylene copolymer (Aflas 150C manufactured by Asahi Glass Co., Ltd.) through coagulation with a coagulation agent other than a metal salt to reduce its metal content to 1% by weight or less. Co-crosslinking agent:
TAIC manufactured by Nippon Kasei Chemical Co., ltd. Silica (I) :
Aerosil R202 manufactured by Nippon Aerosil Co., Ltd. Silica (2):
Aerosil #200 manufactured by Nippon Aerosil Co., Ltd. Silica (3):
Nipsil SS-10 manufactured by Nippon Silica Industrial Co., Ltd.

### Evaluation Methods Tensile strength:

Measured in accordance with JIS K 6251. Hardness:
Measured in accordance with JIS K 6253. Compression set:
Measured at 200°C for 70 hours in accordance with JIS K 6262.

### Plasma resistance:

Evaluated by plasma irradiation under the following conditions:
Type of plasma gas: Oxygen Gas flow rate: 20 SCCM Frequency of RF: 13.56 MHz High frequency output: 150 W Irradiation time: 2 hours
Evaluation method: A decrease in weight per unit area was measured. The case where particles were scarcely developed and the weight loss was scarcely observed is indicated as "good", the case where particles were somewhat developed and the weight loss was somewhat large is indicated as "fair", and the case where particles were developed in large amounts and the weight loss was large is indicated as "poor".

The results thereof are shown together in Table 1.

**Table 1**

| | Example 1 | Comparative Example 1 | Comparative Example 2 | Comparative Example 3 | Comparative Example 4 |
|---|---|---|---|---|---|
| Fluororubber | 100 | 100 | 100 | 100 | 100 |
| Co-Cmsslinking Agent | 2 | - | . | - | - |
| Silica (1) | 10 | - | - | 0.5 | 35 |
| Silica (2) | - | 10 | **-** | - | - |
| Silica (3) | - | - | 10 | - | - |
| γ-Ray Irradiation (kGy) | 120 | 120 | 120 | 120 | 120 |
| Heat Treatment | Treated at 200 °C for 2 hours | Not treated | Not treated | Not treated | Not treated |
| Tensile Strength | 28 | 27 | 11 | 9 | 30 |
| Breaking Elongation (%) | 245 | 250 | 380 | 400 | 190 |
| Hardness (duro A) | 75 | 70 | 69 | 55 | 80 |
| Compression Set (%) | 19 | 28 | 29 | 30 | 27 |
| Plasma Resistance | Good | Fair | Fair | Good | Poor |

The test piece according to the invention shown in Example 1 is good in plasma resistance, compared to the test piece of Comparative Example 1, and improved in tensile strength and plasma resistance, compared to the test piece of Comparative Example 2. Further, the results reveal that the test piece according to the invention shown in Example 1 is remarkably improved in compression set.

On the other hand, the test piece of Comparative Example 3 shows no enhancing effect of mechanical strength, because the content of the silica is low. The test piece of Comparative Example 4 is low in breaking elongation, because the content of the silica is too much, and also significantly decreased in plasma resistance.

As described above, the fluororubber molded article of the invention is excellent in purity and heat resistance, small in a decrease in weight under the plasma conditions, and also excellent in mechanical characteristics, so that it can be suitably used as the rubber material for semiconductor production equipment.

## Claims

1. A fluororubber molded article obtainable by a process comprising subjecting a fluororubber composition to crosslinking by irradiation of ionizing radiation, wherein said fluororubber composition comprises:
(i) a raw rubber which comprises a tetrafluoroethylene-propylene copolymer and which has a metal element content of 1.5% by weight or less; and
(ii) silica which has a primary particle size of 0.5 µm or less and which has been treated to have a hydrophobic surface, in an amount of from 1 to 30 parts by weight per 100 parts by weight of said raw rubber (i); and
(iii) triallyl isocyanurate in an amount of 0.1 to 20 parts by weight per 100 parts by weight of said raw rubber (i),
said process further comprising subjecting the molded article to heat treatment at a temperature of 50 to 300°C for 0.1 to 10 hours.

2. Use of the fluororubber molded article according to claim 1 for a rubber material for semiconductor production equipment.

3. A method for producing a fluororubber molded article, which comprises the steps of:
(A) providing a fluororubber composition comprising:
(i) a raw rubber which comprises a tetrafluoroethylene-propylene copolymer and which has a metal element content of 1.5% by weight or less; and
(ii) silica which has a primary particle size of 0.5 µm or less and which has been treated to have a hydrophobic surface;
(B) preforming said fluororubber composition into a predetermined form in a heated atmosphere to obtain a preformed product;
(C) subjecting said preformed product to crosslinking by irradiation of ionizing radiation to obtain a crosslinked product; and
(D) heat treating said crosslinked product at a temperature of 50 to 300°C for 0.1 to 10 hours.

## Patentansprüche

1. Fluorkautschuk-Formteil, erhältlich durch ein Verfahren, umfassend das Unterwerfen einer Fluorkautschuk-Zusammensetzung einer Vernetzung durch Bestrahlung mit ionisierender Strahlung, wobei die Fluorkautschuk-Zusammensetzung umfasst:
(i) einen Rohkautschuk, welcher ein Tetrafluorethylen-Propylen-Copolymer umfasst und welcher einen Metallelementgehalt von 1,5 Gew.-% oder weniger aufweist; und
(ii) Siliciumdioxid, welches eine Primärteilchengröße von 0,5 µm oder weniger aufweist und welches behandelt wurde, um eine hydrophobe Oberfläche aufzuweisen, in einer Menge von 1 bis 30 Gewichtsteilen pro 100 Gewichtsteile des Rohkautschuks (i); und
(iiii) Triallylisocyanurat in einer Menge von 0,1 bis 20 Gewichtsteilen pro 100 Gewichtsteile des Rohkautschuks (i),
wobei das Verfahren außerdem das Unterwerfen des Formteils einer Wärmebehandlung bei einer Temperatur von 50 bis 300°C während 0,1 bis 10 Stunden umfasst.

2. Verwendung des Fluorkautschuk-Formteils nach Anspruch 1 für ein Kautschukmaterial für Halbleiterherstellungsanlagen.

3. Verfahren zum Herstellen eines Fluorkautschuk-Formteils, welches die Schritte umfasst:
(A) Bereitstellen einer Fluorkautschuk-Zusammensetzung, umfassend:
(i) einen Rohkautschuk, welcher ein Tetrafluorethylen-Propylen-Copolymer umfasst und welcher einen Metallelementgehalt von 1,5 Gew.-% oder weniger aufweist; und
(ii) Siliciumdioxid, welches eine Primärteilchengröße von 0,5 µm oder weniger aufweist und welches behandelt wurde, um eine hydrophobe Oberfläche aufzuweisen;
(B) Vorformen der Fluorkautschuk-Zusammensetzung zu einer vorgegebenen Form in einer erwärmten Atmosphäre, um ein vorgeformtes Produkt zu erhalten;
(C) Unterwerfen des vorgeformten Produkts einer Vernetzung durch Bestrahlung mit ionisierender Strahlung, um ein vernetztes Produkt zu erhalten; und
(D) Wärmebehandeln des vernetzten Produkts bei einer Temperatur von 50 bis 300°C während 0,1 bis 10 Stunden.

## Revendications

1. Article moulé en fluorocaoutchouc pouvant être obtenu par un procédé comprenant l'étape consistant à soumettre une composition de fluorocaoutchouc à une réticulation par irradiation d'un rayonnement ionisant, dans lequel ladite composition de fluorocaoutchouc comprend :
(i) un caoutchouc brut qui comprend un copolymère de tétrafluoroéthylène-propylène et qui a une teneur en éléments métalliques de 1,5 % en poids ou moins ; et
(ii) de la silice qui a une taille de particule primaire de 0,5 µm ou moins et qui a été traitée pour avoir une surface hydrophobe, en une quantité de 1 à 30 parties en poids pour 100 parties en poids dudit caoutchouc brut (i) ; et
(iii) de l'isocyanurate de triallyle en une quantité de 0,1 à 20 parties en poids pour 100 parties en poids dudit caoutchouc brut (i),
ledit procédé comprenant en outre l'étape consistant à soumettre l'article moulé à un traitement à la chaleur à une température de 50 à 300 °C pendant 0,1 à 10 heures.

2. Utilisation de l'article moulé en fluorocaoutchouc selon la revendication 1, pour un matériau de caoutchouc pour un équipement de production de semi-conducteurs.

3. Procédé de production d'un article moulé en fluorocaoutchouc, qui comprend les étapes consistant à :
(A) former une composition de fluorocaoutchouc comprenant :
(i) un caoutchouc brut qui comprend un copolymère de tétrafluoroéthylène-propylène et qui a une teneur en éléments métalliques de 1,5 % en poids ou moins ; et
(ii) de la silice qui a une taille de particule primaire de 0,5 µm ou moins et qui a été traitée pour avoir une surface hydrophobe,
(B) préformer ladite composition de fluorocaoutchouc en une forme prédéterminée dans une atmosphère chauffée pour obtenir un produit préformé ;
(C) soumettre ledit produit préformé à une réticulation par irradiation d'un rayonnement ionisant pour obtenir un produit réticulé ; et
(D) traiter à la chaleur ledit produit réticulé à une température de 50 à 300 °C pendant 0,1 à 10 heures.
